# EUROPÄISCHE PATENTANMELDUNG

(11) **EP 4 502 786 A1**
(43) Veröffentlichungstag der Anmeldung: **05.02.2025**
(21) Anmeldenummer: 23188732.4
(22) Anmeldetag: 31.07.2023
(51) Int. Cl.: G06F 8/65, G05B 19/02, G06F 8/71

(54) **VORRICHTUNG UND VERFAHREN ZUR AKTUALISIERUNG VON SOFTWAREKOMPONENTEN UND ANLAGENKOMPONENTEN EINER AUTOMATISIERUNGSANLAGE**

(71) Anmelder: Siemens Aktiengesellschaft, 80333 München (DE)
(72) Erfinder: Maier, Rupert, 91330 Eggolsheim (DE); Gesswein, Jürgen, 86156 Augsburg (DE); Maier, Sebastian, 91330 Eggolsheim (DE)
(74) Vertreter: Siemens Patent Attorneys

(57) **Zusammenfassung**

Die Erfindung betrifft eine Vorrichtung (E) zur Aktualisierung von Softwarekomponenten und Anlagenkomponenten einer Automatisierungsanlage, aufweisend:
- ein erstes Modul zum Abruf und Empfang von anlagenspezifischen (4a) und servicespezifischen Informationen (5) in einem jeweils vordefinierten Format (7);
- ein zweites Modul (6a) zum Generieren eines Abhängigkeitsgraphen zwischen den Softwarekomponenten, den Anlagenkomponenten der Automatisierungsanlage und Komponenten einer außerhalb der Automatisierungsanlage liegenden, mit der Automatisierungsanlage vernetzten IT-Infrastruktur und/oder Komponenten einer anderen Automatisierungsanlage auf Basis eines vordefinierten Deklarationsformates (7);
- eines dritten Moduls (6b), über das mit Hilfe der anlagenspezifischen Informationen (4a) und mit Hilfe eines zeitlich vordefinierten wiederholbaren Abrufs Informationen zu geänderten Versionen von davon betroffenen Software- und Anlagenkomponenten ermittelt werden, indem Informationen zur Durchführung von Softwareerzeugungsläufen analysiert sowie Versionsinformationen in Software-Informationsspeichern (2; 3) und/oder Softwareverteilplattformen (1) ausgewertet werden;
- ein viertes Modul (6c), das unter Verwendung der generierten Abhängigkeitsgraphen und den Informationen zu geänderten Versionen von davon betroffenen Software- und/oder Anlagenkomponenten diese geänderten Komponenten in die Automatisierungsanlage integriert.

## Beschreibung

Die Erfindung betrifft eine Vorrichtung und ein Verfahren zur Aktualisierung von Softwarekomponenten und Anlagenkomponenten einer Automatisierungsanlage.

Die Erfindung liegt insbesondere auf dem Gebiet der Verbesserung industrieller bzw. technischer Automatisierungsanlagen. Beispiele für Automatisierungsanlagen sind Produktionsanlagen, energieerzeugende Anlagen bzw. Kraftwerke, Gas- bzw. Dampfturbinen, Walzwerke, Papierfabriken, Abfüllanlagen und Wasseraufbereitungsanlagen. Es ist jedoch auch die Optimierung von Systemen, wie Zügen, Autos und Schiffen denkbar.

Immer mehr industrielle Anlagen werden in Form servicebasierter Linux-Systeme implementiert. Einer der Hauptgründe liegt sicherlich in der Vielzahl sehr leistungsfähiger, in der IT-Domäne bereits etablierter Softwarewerkzeuge. Auch in der Industriedomäne ermöglichen diese, die Implementierung völlig neuer, wertvoller Features, die beispielsweise bei der "Automatisierung flexibler Fertigungsanlagen" unverzichtbar sind.

Zur Realisierung solch neuartiger Automatisierungssysteme werden in der Regel viele dieser etablierten Softwarekomponenten (i.d.R. sind dies Third Party Open Source Produkte wie z.B. Docker, Kubernetes, Istio, stern, Kiali, Jaeger, Grafana, Envoy, Egress, Prometheus, ...) benötigt. Diese besitzen darüber hinaus eine Vielzahl von Abhängigkeiten untereinander und werden häufig aktualisiert. So sind die jeweils verwendeten Versionen dieser Komponenten oft schon nach wenigen Wochen oder Monaten veraltet - auch werden alte Versionen oft schon nach relativ kurzer Zeit (z.B. einem Jahr) nicht weiter hinsichtlich Sicherheitsupdates unterstützt. Um Aufwände zu minimieren, werden Automatisierungslösungen normalerweise unter Mithilfe vordefinierter Softwarekomponenten (Funktionen, Microservices, Basissysteme, Libraries, Middleware) implementiert. Diese sind idealerweise über einen Web-Shop erwerbbar. Neben einer Beschreibung sind hier üblicherweise lediglich die übersetzten Laufzeitversionen bzw. ausführbaren Dateien hinterlegt.

Anlagenkomponenten sind hierbei häufig programm- bzw. software- und/oder firmware- und/oder hardwaretechnisch Implementierungsbausteine, die beispielsweise einen Materialfluss oder auch Vorgänge beim Öffnen und Schließen einer Auto- bzw. Zugtüre steuern können. Eine Anlagenkomponente weist in der Regel viele Eigenschaften und/oder Funktionen verfahrenstechnischer Art auf, die projektspezifische bzw. anlagenspezifische Ausprägungen annehmen. Beispiele sind der Signalfluss (z.B. Stromlaufplan), der Materialfluss (z.B. der Rohrleitungsplanung), die zeitliche Reihenfolge, etc.

Gegenüber der bislang in der Automatisierungsdomäne etablierten PLC-Technologie (programable logic controller) resultiert daraus ein neuartiges, kostspieliges und fehleranfälliges Problem. Denn aufgrund dieses Sachverhaltes werden künftig sehr viel häufiger Updates der entsprechenden Softwarekomponenten in allen betroffenen Automatisierungslösungen nötig werden. Darüber hinaus existiert keine umfassende Support-Applikation, um die damit verbundenen Arbeitsschritte zu unterstützen, bzw. wo möglich zu automatisieren. Es fehlt also eine adäquate Möglichkeit, das Wartungs- und Servicepersonal dieser Anlagen von den dabei erforderlich werdenden Aufgaben zu entlasten.

Aufgrund wirtschaftlicher Aufwände sowie schwer vorhersehbarer Folgeprobleme werden solche Aktualisierungen bzw. Verbesserungen oft vermieden. Wenn Aktualisierungsmaßnahmen durchgeführt werden, ist dies in der Regel mit einem aufwändigen Wartung unter Abwägung des Fehlerrisikos und Aufwand/Nutzen-Verhältnisses einer solchen Aktualisierung verbunden.

Diese Problematik der Aktualisierung von Softwarekomponenten und ggf. nach sich ziehenden Anlagenkomponenten ist in der Automatisierungsdomäne besonders kritisch und nicht vergleichbar mit der IT-Domäne, in der diese Softwarekomponenten bislang eingesetzt werden. Gründe dafür sind beispielsweise:
- Im Durchschnitt sind die Automatisierungslösungen viel kleiner. Das Verhältnis zwischen Pflegeaufwand zu Implementierungsaufwand ist daher größer als bei IT-Lösungen.
- Automatisierungslösungen werden i.d.R. nicht von einer großen, umsatzstarken Kundenschar verwendet, auf die die entsprechenden Serviceaufwände umgelegt werden können.
- Fehlerhafte Automatisierungssoftware kann zu teuren, oft sehr gefährlichem Fehlverhalten der automatisierten Anlage führen.
- Das Servicepersonal ist in der Regel mit Automatisierungsexperten besetzt. Für die oben beschriebenen Aufgaben sind jedoch IT-Experten erforderlich, die sehr aktuelles IT-Wissen auf dem Gebiet der betroffenen Softwarekomponenten benötigen.
- Die Remotepflege der betroffenen Anlagen durch entsprechend geschultes Personal ist ohne eine geeignete Toolunterstützung zu gefährlich, zeitaufwändig und teuer.

Es ist Aufgabe der Erfindung, diese Probleme zu überwinden bzw. zu verringern.

Diese Aufgabe wird durch die unabhängigen Ansprüche gelöst. Vorteilhafte Weiterbildungen sind Gegenstand der abhängigen Ansprüche.

Es werden die erfindungsgemäße Vorrichtung und Verfahren sowie Computerprogramm beansprucht.

Ein Aspekt der Erfindung ist Vorrichtung zur Aktualisierung von Softwarekomponenten und Anlagenkomponenten einer Automatisierungsanlage, aufweisend:
- ein erstes Modul zum Abruf und Empfang von anlagenspezifischen und servicespezifischen Informationen in einem jeweils vordefinierten Format;
- ein zweites Modul zum Generieren eines Abhängigkeitsgraphen zwischen den Softwarekomponenten, den Anlagenkomponenten der Automatisierungsanlage und Komponenten einer außerhalb der Automatisierungsanlage liegenden, mit der Automatisierungsanlage vernetzten IT-Infrastruktur und/oder Komponenten einer anderen Automatisierungsanlage auf Basis eines vordefinierten Deklarationsformates;
- eines dritten Moduls, über das mit Hilfe der anlagenspezifischen Informationen und mit Hilfe eines zeitlich vordefinierten wiederholbaren Abrufs Informationen zu geänderten Versionen von davon betroffenen Software- und Anlagenkomponenten ermittelt werden, indem Informationen zur Durchführung von Softwareerzeugungsläufen analysiert sowie Versionsinformationen in Software-Informationsspeichern und/oder Softwareverteilplattformen ausgewertet werden;
- ein viertes Modul, das unter Verwendung der generierten Abhängigkeitsgraphen und den Informationen zu geänderten Versionen von davon betroffenen Software- und/oder Anlagenkomponenten diese geänderten Komponenten in die Automatisierungsanlage integriert.

Die Vorrichtung kann ein fünftes Modul aufweisen, das zum Informieren der die Aktualisierung steuernden und/oder initiierenden Stellen in einem vordefinierten Nachrichtenform mit Hilfe der servicespezifischen Informationen über die Zulässigkeit und Form von Aktualisierungen, über die Aktualisierungsreihenfolge unter Zuhilfenahme des Abhängigkeitsgraphen und über einen passenden Aktualisierungszeitpunkt durch Auswertung von Echtzeitinformationen, vorzugsweise aus dem Betrieb der Automatisierungsanlage, ausgelegt ist.

Bei der Integration der betroffenen Software- und/oder Anlagenkomponenten in die Automatisierungsanlage können Abhängigkeiten zu bereits existierenden Softwarekomponenten und Anlagenkomponenten berücksichtigt werden. Zur Integration der Software- und Anlagenkomponenten kann ein Softwareupdatemechanismus zur Anwendung kommen, der bei bereits existierenden Software- bzw. Anlagenkomponenten verwendet wird.

Die Anlagenkomponenten können Software, Firmware ggf. auch Hardwarekomponenten, wenn z.B. eine Speichererweiterung aufgrund einer Softwareaktualisierung eine Aktualisierung der Anlagenkomponente nach sich zieht und die aktualisierte Software bzw. Firmware nicht mehr in deren Speicher passt. Die genannten Stellen können Server, Geräte etc. sein.

Anlagenspezifischen Informationen können neben anlagenspezifischen, technischen Informationen Informationen zu zu erbringenden Serviceleistungen, Lizenzbedingungen, vordefinierte Testfälle und/oder Updatezeitpunkt(e) sein. Ein passender Updatezeitpunkt kann beispielsweise mit einem Vorgehen wie er in EP 22183572.1 bereits vorgeschlagen wurde, ermittelt werden.

Zulässigkeit kann die Genehmigung durch Servicepersonal, das Bestehen automatisierter Tests und das Hinterlegen von Dokumentation bedeuten.

Eine Weiterbildung der Erfindung sieht vor, dass das vordefinierte Format, die vordefinierte Abhängigkeitsdeklaration und die vordefinierte Nachrichtenform in einem Template abgelegt/gespeichert sind, auf das die mit der Vorrichtung kommunizierenden und gegebenenfalls Daten austauschenden Stellen zugreifen können oder das durch die Vorrichtung an diese Stellen verteilt wird. Die die anlagenspezifischen Informationen können Informationen über die zu erbringenden Leistungen und einzuhaltende Serviceabläufe in der Automatisierungsanlage enthalten.

Ein weiterer Aspekt der Erfindung sieht ein Verfahren zur Aktualisierung von Softwarekomponenten und Anlagenkomponenten einer Automatisierungsanlage, das vorzugsweise computerimplementiert ist und folgende Schritte aufweist:
- Abruf und Empfang von anlagenspezifischen und servicespezifischen Informationen in einem vordefinierten Format;
- Generieren eines Abhängigkeitsgraphen in einem vordefinierten Deklarationsformat zwischen den Softwarekomponenten, den Anlagenkomponenten der Automatisierungsanlage und Komponenten einer außerhalb der Automatisierungsanlage liegenden, mit der Automatisierungsanlage vernetzten IT-Infrastruktur und/oder Komponenten einer anderen Automatisierungsanlage, mit Hilfe der anlagenspezifischen Informationen und mit Hilfe eines zeitlich vordefinierten wiederholbaren Abrufs Informationen zu geänderten Versionen von davon betroffenen Software- und Anlagenkomponenten ermittelt werden, indem Informationen zur Durchführung von Softwareerzeugungsläufen analysiert sowie Versionsinformationen in Software-Informationsspeichern und/oder Softwareverteilplattformen ausgewertet werden, und
- Integrieren der geänderten Komponenten in die Automatisierungslösung unter Verwendung der generierten Abhängigkeitsgraphen und den Informationen zu geänderten Versionen von davon betroffenen Software- und/oder Anlagenkomponenten in die Automatisierungsanlage.

Die die Aktualisierung steuernden und/oder initiierenden Stellen können in einem vordefinierten Nachrichtenform mit Hilfe der servicespezifischen Informationen über die Zulässigkeit und Form von Aktualisierungen, über die Aktualisierungsreihenfolge unter Zuhilfenahme des Abhängigkeitsgraphen und über einen passenden Aktualisierungszeitpunkt durch Auswertung von Echtzeitinformationen, vorzugsweise aus dem Betrieb der Automatisierungsanlage, informiert werden.

Die Komponenten der Erfindung können Hardware-, Firmware- und/oder Softwarekomponenten repräsentieren.

Ein Vorteil der Erfindung liegt in der Erkennung, welche Anlagen, Geräte und Softwarekomponenten überhaupt von der Aktualisierung einer bestimmten oder Softwarekomponente betroffen sind und die exakte Einhaltung und Ausführung aller erforderlichen Arbeits- bzw. Teilschritte, um eine neue Version einer Softwarekomponente auf Basis neuer Versionen von IT-Komponenten und/oder Softwarekomponenten zu erzeugen, auszutesten und in übergeordnete Systeme (Geräte industrieller Anlagen oder Web-Shops für die industriellen Anlagen zu integrieren.

Das Verfahren kann wie die oben beschriebene Vorrichtung entsprechend weitergebildet werden.

Ein weiterer Aspekt der Erfindung sieht ein Computerprogrammprodukt mit Mitteln zur Durchführung des Verfahrens, wenn das Computerprogrammprodukt auf dem genannten Steuergerät und/oder verteilt innerhalb der Anordnung zur Ausführung gebracht wird.

Die Vorrichtung sieht Mittel/Einheiten bzw. Module zur Durchführung des oben genannten Verfahrens vor, die jeweils hardwaremäßig und/oder firmwaremäßig und/oder softwaremäßig bzw. als Computerprogramm bzw. Computerprogrammprodukt ausgeprägt sein können.

Die oben beschriebenen Geräte/Vorrichtungen/Anordnungen können ebenfalls entsprechend dem Verfahren bzw. des Computerprogramms (-produkts) weitergebildet werden.

Weitere Vorteile, Einzelheiten und Weiterbildungen der Erfindung ergeben sich aus der nachfolgenden Beschreibung von Ausführungsbeispielen in Verbindung mit den Zeichnungen.

Es zeigt:
Die Figur 1 zeigt Module der erfinderischen Vorrichtung und
die Figur 2 schematisch eine Umgebung für eine technische Anlage, in der die erfindungsgemäße Vorrichtung/System bzw. das erfindungsgemäße Verfahren eingesetzt werden können.

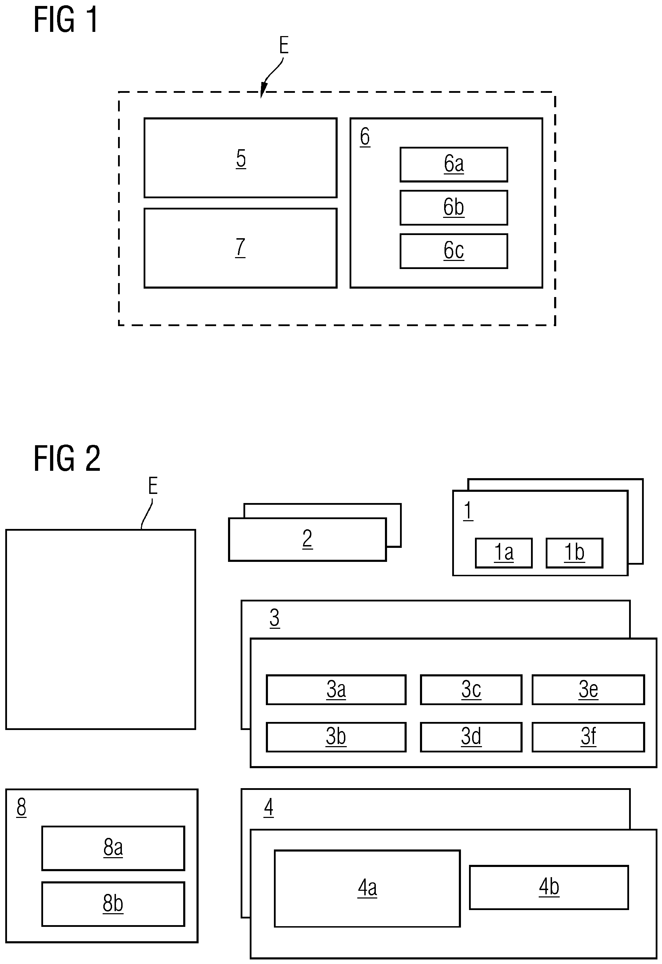

Die erfinderische Vorrichtung E ist in der Figur 2 mit einem Kästchen angedeutet. Die erfinderische Vorrichtung E - wie in Figur 1 gezeigt - weist im Beispiel folgende Module bzw. Funtkionen auf:
Mit 5 ist eine Datenbank gekennzeichnet, die mit den hinsichtlich der Aktualisierung der Komponenten zu wartenden Automatisierungsanlagen bzw. Anlage verbunden ist.

Diese Datenbank 5 alle anlagenspezifischen Informationen darüber, welche Anlagen, die beispielsweise von einem Service-Provider betreut werden sollen, welche Leistungen zu erbringen sind, welche Abläufe einzuhalten sind und wie auf die Daten der Anlage zugegriffen werden kann.

Falls das Servicepersonal Provider-eigene Anlagen- und/oder Softwarekomponenten betreut, enthält diese Datenbank alle Informationen darüber, welche Anlagen-/Softwarekomponenten existieren und vom Servicepersonal selbst betreut werden sollen, welche Abläufe einzuhalten sind und wie auf die Daten der jeweiligen Anlagen-/Softwarekomponente zugegriffen werden kann.

Damit eine automatisierte Interpretation dieser Daten möglich ist, wird eine von der erfinderischen Vorrichtung vorgegebenes Format 7 in Form einer Datenbankstruktur verwendet. Die erfinderische Vorrichtung sieht ein Modul vor, welche zum Abruf und Empfang von Informationen aus der Datenbank 5 ausgebildet ist.

Die erfinderische Vorrichtung sieht ein weiteres Modul 6 vor, die folgende Funktionen umfassen kann:
Dieses Modul ist mit einer Funktion 6a zum Generieren eines Abhängigkeitsbaums zwischen den zu betreuten Anlagen 4, Geräten 4b, Softwarekomponenten 3 und IT-Komponenten 2 mit der Automatisierungsanlage vernetzten IT-Infrastruktur ausgestaltet. Immer wenn Änderungen an einzelnen Artefakten vorgenommen werden, wird ein erneutes bzw. wiederholtes Durchsuchen der damit verbundenen Artefakte erforderlich. Ein Artefakt ist in diesem Zusammenhang ein anderer Begriff für eine beliebige Hard- oder Softwarekomponente. Sie sind Teile einer Gesamtlösung und besitzen eine eigene Roadmap, eine eigene Versionierung und werden häufig von irgendwelchen Drittherstellern implementiert und gepflegt. Zu diesem Zweck wird bei jedem "Build" (Build-Files 3c) automatisch ein erneuter Abruf von neuen und/oder geänderten Versionen der Softwarekomponenten durch diese Funktion angestoßen. Durch Verwendung eines Templates (Vorlage) wird eine Abhängigkeitsdeklaration vordefiniert und der Abruf bzw. Datenempfang sichergestellt.

Das Durchsuchen der Abhängigkeiten zwischen Softwarekomponenten 3 und IT-Komponenten 2 kann über bereits vorhandene Softwarekomponenten erfolgen. Hierbei können ggf. existierende Formate 7 für Abhängigkeitsdeklaration oder Tools 8a für automatische Abhängigkeits-/Sicherheitsüberprüfung genutzt werden. Die Ermittlung der verbleibenden Abhängigkeiten (z.B. Softwarekomponente zu Gerät und Gerät zu Anlage bzw. einer anderen Anlage) kann durch eine Zusatzkomponente sichergestellt werden, die die Anlagen-Repositories (Datenbanken) 4a durchsucht.

Eine weitere Funktion 6b wird zyklisch (z.B. einmal täglich) ausgeführt. Sie analysiert die Inhalte der Datenbanken mit Anlageninformationen 4a hinsichtlich Änderungen und die Inhalte der relevanten Web-Shops 1 und Repositories (Informationsspeicher) für IT-Komponenten 2 und Softwarekomponenten 3 hinsichtlich Informationen zur Durchführung von Softwareerzeugungsläufen, neue Sicherheitslücken und Versionen (ggf. unterstützt durch unterstützende Tools 8a).

Die dazu erforderliche Information, welche Web-Shops, Datenbanken und Repositories zu betrachten sind, entnimmt ein zyklische Release Monitoring 6b aus dem Abhängigkeitsbaum, der über die Funktion 6a gebildet wurde.

Werden Software-relevante und/oder sicherheitskritische Änderungen in einer Datenbank festgestellt oder neue, relevante Versionen einer IT- oder Softwarekomponente identifiziert, werden diese an die "Build-, Test-, Deployment- und Dokumentationsfunktion 6c übergeben (in Form einer Liste oder durch direkten Aufruf).

Um die Aktualisierung vollständig bzw. nahezu vollständig automatisiert ablaufen lassen zu können, verwendet die erfindungsgemäße Vorrichtung Templates für die "Repositories der Softwarekomponenten" 3, die Datenbank 5 der zu betreuenden Anlagen und den jeweiligen Datenbanken 4a mit Anlageninformationen. Werden diese Templates bei der Erzeugung der einzelnen Instanzen verwendet, ist ein standardisierte Zugriff, eine sichere Interpretation der enthaltenen Daten und Automatisierung vieler Einzelschritte bei der automatisierten Aktualisierung der Softwarekomponenten und Anlagenkomponenten auf Basis der erfinderischen Vorrichtung gewährleistet.

Es ist möglich, bereits bekannte Formate zur Deklaration von Abhängigkeiten einzusetzen (Beispiele: requirements.txt (Python/PIP), package.json (JavasScript/NPM). Diese definieren für verschiedene Programmiersprachen Abhängigkeiten zu bestimmten Softwarekomponenten und definieren mittels semantischer Versionierung diese Abhängigkeiten ggf. auch zu bestimmten Versionen. Sie ermöglichen das Suchen nach relevanten Sicherheitslücken in den genutzten Softwarekomponenten und nach zugehörigen Updates, die diese Lücken schließen. Bekannte Abhängigkeitsdeklarationen sind jedoch nicht allgemein genug, um alle Abhängigkeiten der Anlagen und der darin existierenden Systeme und deren Programmiersprachen auszudrücken. Entsprechend der vorliegenden Erfindung werden diese um erfindungsgemäß vordefinierte Formate zur Abhängigkeitsdeklaration ergänzt.

Die erfindungsgemäße Vorrichtung verwendet neben eigenen, neuartigen Funktionalitäten auch bereits vorhandene und etablierte Softwarekomponenten, die erforderliche Basisfunktionalitäten realisieren.

Eine Abhängigkeitsdurchsuchung (auch Software Composition Analysis genannt) kann ggf. teilweise durch Tools Go oder PIP oder Cargo realisiert werden. Sie zeigen automatisiert existierende Sicherheitslücken in den eingesetzten IT- und Softwarekomponenten auf, in dem alle Abhängigkeiten zwischen diesen Komponenten analysiert und berücksichtigt werden. Darüber hinaus sind diese in der Lage, über mögliche Updates zu informieren.

Beispiele hierfür sind: Dependency Scanning Feature von Git-Lab, Dependency Graph bzw. Dependabot von GitHub. Diese sind unter folgenden URLs beschrieben:
▪ https://github.com/dependabot
▪ https://www.synopsys.com/glossary/what-issoftware-compositionanalysis.html#:~:text=Software%20composition%20anal y-sis%20(SCA) %20is,source%20license%20limitation s%2 0and%2 0obligations
▪ https://owasp.org/www-project-dependencycheck/
▪ https://docs.gitlab.com/ee/user/application_se curity/dependency_scanning/

Für die Sprache Phyton gibt es das Tool PIP und eine Datei z.B. "requirements.txt", mit der man die Abhängigkeiten zu anderen Python-Paketen angeben kann.

Ein Beispiel für ein Deklarationsformat, in dem die Versionen angegeben werden:

```
      # requirements.txt
     docopt == 0.6.1 # exact version
     keyring >= 4.1.1 # minimum version
```

In Go werden die Abhängigkeiten in der Datei "go.mod" im Hauptverzeichnis. Begleitet wird die Datei "go.mod" von der Datei "go.sum". Sie enthält Prüfsummen für die Packages, so dass man für eine Version nicht später ein anderes Package verwendet werden kann.

Ein Beispiel für ein Deklarationsformat ist:

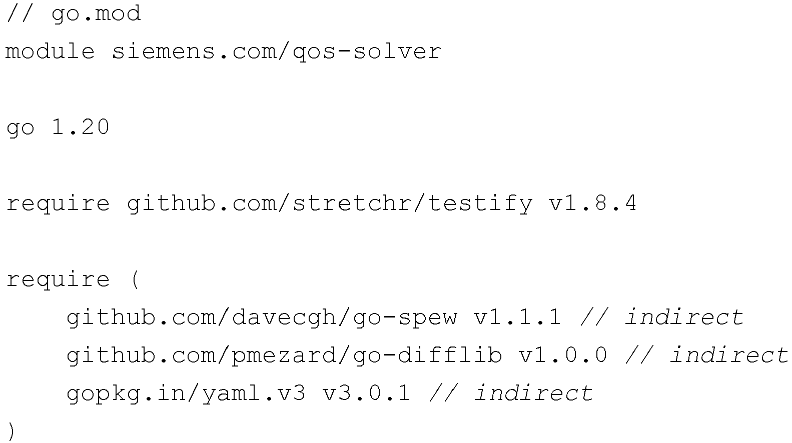

In C++ werden die Abhängigkeiten für eine Komponente in der Datei "manifest" angegeben. Der Build2-Übersetzer kümmert sich um alle Abhängigkeiten und arbeitet indirekte Abhängigkeiten rekursiv ab.

Ein Beispiel für ein Deklarationsformat ist:

```
     # manifest
     : 1
     name: libbuild2-hello
     version: 0.2.0
     project: build2
     depends: * build2 >= 0.16.0-
     depends: * bpkg >= 0.16.0- 
```

Das eigentliche sogenannte Deployment von neuen Versionen der betroffenen Softwarekomponenten in die entsprechenden Geräte und Web-Shops ist eine Teilaufgabe des Moduls bzw. der Funktion 6c "Build, Test, Deployment und Dokumentation". Dieser Teil kann beispielsweise mittels einer Softwarekomponente (z.B. "Software-Update", siehe https://github.com/siemens/swupdate/blob/master/README.md) umgesetzt werden. Unter Verwendung der generierten Abhängigkeitsgraphen und den Informationen zu geänderten Versionen integriert dieses Modul die geänderten Komponenten in die Automatisierungsanlage.

Ein weiteres Modul der erfinderischen Vorrichtung informiert die die Aktualisierung steuernden und/oder initiierenden Stellen z.B. 8b in einem vordefinierten Nachrichtenform über die Aktualisierungsreihenfolge mit Zuhilfenahme des Abhängigkeitsgraphen bzw. -baumes, über den Aktualisierungszeitpunkts und über die Zulässigkeit der Aktualisierung mit Hilfe der anlagenspezifischen Informationen. Die Zulässigkeit kann z.B. durch Genehmigung durch Servicepersonal, durch Bestehen automatisierter Tests und automatisch hinterlegter Dokumentation bestimmt sein.

Ein Web-Shop ist in Figur 2 mit 1 gekennzeichnet. Neben einer Beschreibung sind hier üblicherweise lediglich die übersetzten Laufzeitversionen bzw. ausführbaren Dateien, nicht aber die zugehörigen Entwicklungs-, Generierungs- und Testdokumente der Software hinterlegt.

Gemäß Kennzeichnung 1a kann ein Web-Shop 1 SoftwareKomponenten anderer Hersteller umfassen. Dabei werden die erforderlichen Updates von einer dritten, die Aktualisierung steuernden und/oder initiierenden Stelle erstellt. Gemäß Kennzeichnung 1b kann der Web-Shop 1 eigene Softwarekomponenten anbieten. Dabei kann die die Aktualisierung steuernde bzw. initiierende Stelle in die erfindungsgemäße Vorrichtung implementiert sein. Um den Informationsfluss zwischen Vorrichtung und den genannten Stellen sicherzustellen, kann ein vordefiniertes Nachrichtenformat aus dem Template verwendet werden.

Die Aktualisierung, die auf Basis dieser Komponenten umgesetzt wird, betrifft die Softwarekomponenten und Anlagenkomponenten z.B. Hardware (u. a. physikalische Geräte, auf denen diese Softwarekomponenten ablaufen) industrieller Anlagen (abgekürzt durch "Anlage").

Eine Datenbank 4a (bzw. GIT) umfasst Anlageninformationen. Diese enthält alle erforderlichen Daten und Informationen, die zur Pflege der Automatisierungsanlage erforderlich sind. Beispiele sind Informationen, aus denen hervorgeht, wie auf die einzelnen Komponenten zugegriffen werden kann, welche Softwarekomponenten auf welche Weise konfiguriert werden müssen und auf welchem Gerät sie eingesetzt werden (Mapping). Entsprechend des genannten Templates werden diese Daten standardisiert abgelegt.

In Figur 2 sind mit 4b sind z.B. physikalische Geräte der industriellen Anlage (Industrie-PCs) oder um virtuelle Computer gekennzeichnet, die in einer Cloud-Umgebung ablaufen. Auf diesen Geräten laufen die zu aktualisierenden Softwarekomponenten. Damit die Anlage möglichst zeitnah mit einer aktuellen Software- und/oder Anlagenkomponenten arbeitet, werden die aktualisierten Komponenten in die jeweiligen Geräte verteilt (deployed).

Es werden in Figur 2 Versions-Repositories 2 externer IT-Komponenten gezeigt. Hierbei handelt es sich i.d.R. um die Versions-Repositiories von Linux-basierten IT-Tools und Libraries. Softwarekomponenten wie Kubernetes, Docker und Istio kommen zwar aus der IT-Domäne, werden aber mehr und mehr in der Automatisierungsdomäne eingesetzt. Sie sind i.d.R. als Open Source verfügbar (Quellcode, Laufzeitversionen und Dokumentation). Updates werden üblicherweise häufig erzeugt und veraltete Versionen schon nach kurzer Zeit nicht mehr unterstützt. Daher ist auch ein häufiges Aktualisieren der Softwarekomponenten erforderlich, die auf diese IT-Komponenten aufsetzen.

In Figur 2 werden Repositories 3 der (Anlagen)eigenen Softwarekomponenten gezeigt. Zur Automatisierung industrieller Anlagen sind vorgefertigte, ggf. wiederverwendete Softwarekomponenten (Funktionen, Microservices, Basissysteme, Libraries, Middleware) erforderlich. Alle Dokumente und Daten, die zur Entwicklung, Pflege, Test und Dokumentation dieser Komponenten erforderlich sind, werden in Repositories (z.B. Git) gehalten, die auf Strukturen und Vorgaben des erwähnten Templates 7 beruhen.

In Figur 2 ist mit 3a sind Abhängigkeiten zu anderen Komponenten anderer Automatisierungsanlagen gekennzeichnet. Es ist möglich, dass bei der Implementierung von Softwarekomponenten auf andere, bereits etablierte IT- oder SW-Komponenten aufgesetzt wird. Hierbei wird mittels des Templates 7 auf standardisierte Weise beschrieben, um welche Komponenten betroffen sind und wo diese zu finden sind.

Die Quelldateien bzw. Quellcode, die der Softwarekomponente zugrunde liegen, sind in Figur 2 mit 3b gekennzeichnet.

Dateien (Scripte, Make-Files, etc.), als Build-Files bezeichnet, die zur Erzeugung einer neuen Laufzeitversion erforderlich sind, sind in Figur 2 mit 3c gekennzeichnet.

Testfälle sind in Figur 2 mit 3d gekennzeichnet. Diese sind beim automatisierten Test erfolgreich zu durchlaufen, damit eine neue Version per Web-Shop 1 ausgeliefert oder in den Anlagen 4 eingesetzt werden kann.

Die aktuellen Laufzeitdateien, deren aktuellen Versionen der jeweiligen Softwarekomponente in Figur 2 mit 3e gekennzeichnet sind, können in Anlagen 4 aber auch indirekt über den Web-Shop 1 in anderen Anlagen zum Einsatz kommen.

Zu jeder Softwarekomponente sollte eine Beschreibung existieren, aus der hervor geht, wie die Komponente einzusetzen ist und welche Funktionalität sie besitzt (Dokumentation). Zusätzlich wird zu jedem Release der jeweiligen Softwarekomponente auch hinterlegt, welche Änderungen gegenüber der Vorgängerversion vorgenommen wurden (Historie). Diese können in einer sogenannten History-Datenbank 3f gespeichert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Vorrichtung (E) zur Aktualisierung von Softwarekomponenten und Anlagenkomponenten einer Automatisierungsanlage, aufweisend:
- ein erstes Modul zum Abruf und Empfang von anlagenspezifischen (4a) und servicespezifischen Informationen (5) in einem jeweils vordefinierten Format (7);
- ein zweites Modul (6a) zum Generieren eines Abhängigkeitsgraphen zwischen den Softwarekomponenten, den Anlagenkomponenten der Automatisierungsanlage und Komponenten einer außerhalb der Automatisierungsanlage liegenden, mit der Automatisierungsanlage vernetzten IT-Infrastruktur und/oder Komponenten einer anderen Automatisierungsanlage auf Basis eines vordefinierten Deklarationsformates (7);
- eines dritten Moduls (6b), über das mit Hilfe der anlagenspezifischen Informationen (4a) und mit Hilfe eines zeitlich vordefinierten wiederholbaren Abrufs Informationen zu geänderten Versionen von davon betroffenen Software- und Anlagenkomponenten ermittelt werden, indem Informationen zur Durchführung von Softwareerzeugungsläufen analysiert sowie Versionsinformationen in Software-Informationsspeichern (2; 3) und/oder Softwareverteilplattformen (1) ausgewertet werden;
- ein viertes Modul (6c), das unter Verwendung der generierten Abhängigkeitsgraphen und den Informationen zu geänderten Versionen von davon betroffenen Software- und/oder Anlagenkomponenten diese geänderten Komponenten in die Automatisierungsanlage integriert.

2. Vorrichtung nach dem vorhergehenden Anspruch, **gekennzeichnet durch** ein fünftes Modul zum Informieren der die Aktualisierung steuernden und/oder initiierenden Stellen (6c; 8b) in einem vordefinierten Nachrichtenform mit Hilfe der servicespezifischen Informationen über die Zulässigkeit und Form von Aktualisierungen, über die Aktualisierungsreihenfolge unter Zuhilfenahme des Abhängigkeitsgraphen und über einen passenden Aktualisierungszeitpunkt durch Auswertung von Echtzeitinformationen, vorzugsweise aus dem Betrieb der Automatisierungsanlage.

3. Vorrichtung nach einem der vorhergehenden Ansprüche, **dadurch gekennzeichnet, dass** bei der Integration der betroffenen Software- und/oder Anlagenkomponenten in die Automatisierungsanlage Abhängigkeiten zu bereits existierenden Softwarekomponenten (8a) und Anlagenkomponenten (4b) berücksichtigt werden.

4. Vorrichtung nach dem vorhergehenden Anspruch, **dadurch gekennzeichnet, dass** zur Integration der Software- und Anlagenkomponenten ein Softwareupdatemechanismus (8b) zur Anwendung kommt, der bei bereits existierenden Software- bzw. Anlagenkomponenten verwendet wird.

5. Vorrichtung nach einem der vorhergehenden Ansprüche, **dadurch gekennzeichnet, dass** das vordefinierte Format, die vordefinierte Abhängigkeitsdeklaration und die vordefinierte Nachrichtenform in einem Template abgelegt/gespeichert sind, auf das die mit der Vorrichtung kommunizierenden und gegebenenfalls Daten austauschenden Stellen zugreifen können oder das durch die Vorrichtung an diese Stellen verteilt wird.

6. Vorrichtung nach einem der vorhergehenden Ansprüche, **dadurch gekennzeichnet, dass** die anlagenspezifischen und servicespezifischen Informationen neben anlagenspezifischen, technischen Informationen (4a) auch Informationen über die zu erbringenden Leistungen und einzuhaltende Abläufe bei Servicemaßnahmen in der Automatisierungsanlage enthalten.

7. Verfahren zur Aktualisierung von Softwarekomponenten und Anlagenkomponenten einer Automatisierungsanlage, aufweisend folgende Schritte:
- Abruf und Empfang von anlagenspezifischen und servicespezifischen Informationen in einem vordefinierten Format (7) ;
- Generieren eines Abhängigkeitsgraphen in einem vordefinierten Deklarationsformat (7) zwischen den Softwarekomponenten, den Anlagenkomponenten der Automatisierungsanlage und Komponenten einer außerhalb der Automatisierungsanlage liegenden, mit der Automatisierungsanlage vernetzten IT-Infrastruktur und/oder Komponenten einer anderen Automatisierungsanlage, mit Hilfe der anlagenspezifischen Informationen (4a) und mit Hilfe eines zeitlich vordefinierten wiederholbaren Abrufs Informationen zu geänderten Versionen von davon betroffenen Software- und Anlagenkomponenten ermittelt werden, indem Informationen zur Durchführung von Softwareerzeugungsläufen analysiert sowie Versionsinformationen in Software-Informationsspeichern (2; 3) und/oder Softwareverteilplattformen (1) ausgewertet werden, und
- Integrieren der geänderten Komponenten in die Automatisierungslösung unter Verwendung der generierten Abhängigkeitsgraphen und den Informationen zu geänderten Versionen von davon betroffenen Software- und/oder Anlagenkomponenten in die Automatisierungsanlage.

8. Verfahren nach dem vorhergehenden Anspruch, **dadurch gekennzeichnet, dass** die die Aktualisierung steuernden und/oder initiierenden Stellen (6c und 8b) in einem vordefinierten Nachrichtenform mit Hilfe der servicespezifischen Informationen über die Zulässigkeit und Form von Aktualisierungen, über die Aktualisierungsreihenfolge unter Zuhilfenahme des Abhängigkeitsgraphen und über einen passenden Aktualisierungszeitpunkt durch Auswertung von Echtzeitinformationen, vorzugsweise aus dem Betrieb der Automatisierungsanlage, informiert werden.

9. Verfahren nach einem der vorhergehenden Ansprüche, **dadurch gekennzeichnet, dass** das vordefinierte Format, die vordefinierte Abhängigkeitsdeklaration und die vordefinierte Nachrichtenform in einem Template abgelegt/gespeichert sind, auf das die Daten austauschenden Stellen zugreifen können oder das an diese Stellen verteilt wird.

10. Verfahren nach einem der vorhergehenden Ansprüche, **dadurch gekennzeichnet, dass** die anlagenspezifischen und servicespezifischen Informationen neben anlagenspezifischen, technischen Informationen (4a) auch Informationen über die zu erbringenden Leistungen und einzuhaltende Abläufe bei Servicemaßnahmen in der Automatisierungsanlage enthalten.

11. Verfahren nach einem der vorhergehenden Verfahrensansprüche, **dadurch gekennzeichnet, dass** bei der Integration der betroffenen Software- und/oder Anlagenkomponenten in die Automatisierungsanlage Abhängigkeiten zu bereits existierenden Softwarekomponenten (8a) und Anlagenkomponenten (4b) berücksichtigt werden.

12. Verfahren nach dem vorhergehenden Anspruch, **dadurch gekennzeichnet, dass** zur Integration der Software- und Anlagenkomponenten ein Softwareupdatemechanismus (8b) zur Anwendung kommt, der bei bereits existierenden Software- bzw. Anlagenkomponenten verwendet wird.

13. Computerprogrammprodukt mit Mitteln zur Durchführung des Verfahrens nach einem der vorgenannten Verfahrensansprüche, wenn das Computerprogrammprodukt in einer Vorrichtung nach einem der vorhergehenden Vorrichtungsansprüchen zur Ausführung gebracht wird.
